Europäisches Patentamt

European Patent Office

Office européen des brevets

(11) Veröffentlichungsnummer: **0 410 185 A2**

# EUROPÄISCHE PATENTANMELDUNG

(21) Anmeldenummer: **90112989.0**

(22) Anmeldetag: **07.07.90**

(51) Int. Cl.⁵: **B32B 31/22**

(30) Priorität: **28.07.89 DE 3925113**

(43) Veröffentlichungstag der Anmeldung:
**30.01.91 Patentblatt 91/05**

(84) Benannte Vertragsstaaten:
**AT BE CH ES FR GB IT LI LU NL**

(71) Anmelder: **HANS FEIERABEND GMBH**
**Otto-Hahn-Strasse**
**D-3352 Einbeck(DE)**

(72) Erfinder: **Hüser, Eckhart**
**Langer Wall 18**
**D-3352 Einbeck(DE)**

(74) Vertreter: **Sobisch, Peter, Dipl.-Ing. et al**
**Patentanwälte Dipl.-Inge. Röse, Kosel &**
**Sobisch Odastrasse 4a Postfach 129129**
**D-3353 Bad Gandersheim 1(DE)**

(54) Verfahren zur Herstellung von Hochglanz-Oberflächen.

(57) Hochglanz-Oberflächen auf einem Trägermaterial werden dadurch hergestellt, daß auf einen Schichtstoff (2) zum Beschichten des Trägermaterials (1) wenigstens eine Feinschicht (3, 6) aufgebracht wird, wobei die obere Fläche der obersten Feinschicht (6) durch spanabhebende Bearbeitung mit der Hochglanz-Oberfläche versehen wird.

Fig. 3

## VERFAHREN ZUR HERSTELLUNG VON HOCHGLANZ-OBERFLÄCHEN

Die Erfindung betrifft ein Verfahren zur Herstellung von Hochglanz-Oberflächen auf einem Trägermaterial.

Bei der Herstellung von Möbelteilen mit Hochglanz-Oberflächen ist es bekannt, das Trägermaterial mittels mindestens zweimaliger Grundierung mit Fillern und jeweilig folgendem Schleifen auszustatten. Diese doppelte Fillerschicht muß dann ca. 6 Wochen abbinden. Nach der Abbindezeit und dem nachfolgenden Schleifen werden bis zu drei Lackschichten aufgebracht, wobei nach jeder Lackschicht eine Trocknungsphase von jeweils ca. 2 Wochen und vor Aufbringen der nächsten Lackschicht die getrocknete Lackschicht geschliffen und poliert wird. Damit werden zur Herstellung von Hochglanz-Oberflächen mindestens 8 Arbeitsgänge notwendig, die mindestens acht Wochen in Anspruch nehmen. Als Trägermaterial können bei derartigen Möbelteilen nur sehr teure und schwere Hölzer oder hochverdichtete Faserplatten verwendet werden.

Weiterhin ist bekannt, Trägermaterialien mit einem Schichtstoff zu beschichten. Die üblicherweise verwendeten Schichtstoffe werden vor dem Aufbringen auf das Trägermaterial als Endlosbänder hergestellt, die entsprechend abgelängt werden und aus auf einem Träger, z.B. aus Dekorpapier aufgebrachten Kunststoffharzschichten bestehen, wobei z.B. die Verwendung von Polyester-Harz oder Melamin-Harz bekannt ist.

Der Erfindung liegt die Aufgabe zugrunde, ein Verfahren zur Herstellung von Hochglanz-Oberflächen auf einem Trägermaterial zu schaffen, das mit weniger Arbeitsgängen und in wesentlich kürzerer Zeit als das eingangs erwähnte Verfahren durchgeführt werden kann.

Diese Aufgabe wird gemäß der Erfindung dadurch gelöst, daß auf einen Schichtstoff zum Beschichten des Trägermaterials wenigstens eine Feinschicht aufgebracht wird, wobei die obere Fläche der obersten Feinschicht durch spanabhebende Bearbeitung mit der Hochglanz-Oberfläche versehen wird.

Das erfindungsgemäße Verfahren wird gegenüber dem beschriebenen, bekannten Verfahren mit weniger Arbeitsgängen - nämlich Beschichten mit Schichtstoff, Beschichten mit wenigstens einer weiteren Feinschicht und spanabhebende Bearbeitung - sowie in einer wesentlich kürzeren Zeit - nämlich den Aushärteperioden für die Feinschichten, die nur je 2 Tage dauern, - durchgeführt.

Nach einem bevorzugten Merkmal der Erfindung wird die oberste Feinschicht auf den Schichtstoff nach dem Beschichten des Trägermaterials mit dem mit ggf. weiteren Feinschichten beschichteten Schichtstoff aufgebracht. Dies bringt eine weitere Einsparung bei der Durchlaufzeit, da die ggf. weiteren Feinschichten schon während der Herstellung des Schichtstoffes in Endlosbändern aufgebracht werden und eine zeitaufwendigere Beschichtung von schon zugeschnittenem, mit Schichtstoff beschichtetem Trägermaterial nur für die oberste Feinschicht notwendig wird.

Nach einem weiteren Merkmal der Erfindung sind auf den Schichtstoff zumindest zwei Feinschichten aufgebracht.

Das eingangs beschriebene bekannte Verfahren zur Herstellung von Hochglanz-Oberflächen auf einem Trägermaterial wird auch bei der Herstellung von Intarsienarbeiten auf Holzoberflächen angewandt, wobei auf die Oberfläche des z.B. als Trägermaterial dienenden Holzes die Bestandteile der Intarsien aufgeleimt werden, die die gesamte Holzoberfläche überdecken müssen. Danach wird mittels spanabhebender Bearbeitung die Intarsienoberfläche geglättet und entsprechend dem eingangs beschriebenen Verfahren mit den Lackschichten und der Hochglanz-Oberfläche versehen. Dieses Verfahren weist zusätzlich zu dem schon geschilderten aufwendigen Verfahren zur Herstellung der Hochglanz-Oberfläche weitere aufwendige Arbeitsgänge auf.

Der Erfindung liegt die weitere Aufgabe zugrunde, die Möglichkeit zur Herstellung derartiger mit Intarsien usw. bestückten Oberflächen mit möglichst wenigen Arbeitsgängen in einer geringeren Zeit als mit dem beschriebenen, bekannten Verfahren durchzuführen.

Diese Aufgabe wird dadurch gelöst, daß nach dem erfindungsgemäßen Verfahren vor dem Beschichten mit der obersten Feinschicht wenigstens eine Einlage eingebracht wird.

Das erfindungsgemäße Verfahren wird gegenüber dem beschriebenen, bekannten Verfahren mit weniger Arbeitsgängen - nämlich Beschichten mit Schichtstoff, der ggf. mit weiteren Feinschichten beschichtet sein kann, Aufbringen der Einlage, Beschichten mit der obersten Feinschicht und spanabhebende Bearbeitung - sowie in einer wesentlich kürzeren Zeit - nämlich der Aushärteperiode für die oberste Feinschicht und ggf. weiterer Feinschichten, die jeweils 2 Tage beträgt - durchgeführt.

Zur Vermeidung einer unnötig dicken obersten Feinschicht werden nach einer vorteilhaften Ausführungsform der Erfindung zur Aufnahme der Einlagen die unter der obersten Feinschicht liegenden Schichten mit den Abmessungen der Einlagen entsprechend ausgestalteten Aussparungen versehen.

Nach einer weiteren vorteilhaften Ausführungsform der Erfindung werden die Aussparungen für die Einlagen mittels spanabhebender Bearbeitung hergestellt. Dies ist erfahrungsgemäß das schnellste Verfahren zur Herstellung einer solchen Aussparung.

Zweckmäßigerweise sind die oberen Flächen der Einlagen mit der oberen Fläche der unter der obersten Feinschicht liegenden Schicht bündig.

Nach einem bevorzugten Merkmal der Erfindung wird die oberste Feinschicht durch die spanabhebende Bearbeitung zur Erzeugung der Hochglanz-Oberfläche bis auf eine geringe Schichtdicke über den oberen Flächen der Einlagen abgetragen. Damit wird, trotz der notwendigen Schutzschicht über den Einlagen, eine Verringerung der optischen Wirkung der Einlagen weitestgehendst ausgeschlossen.

Nach einem weiteren bevorzugten Merkmal der Erfindung wird als Schichtstoff ein auf der Grundlage von Polyester-Harz hergestellter Schichtstoff und als Feinschichten Polyester-Harz verwendet. Durch die Verwendung gleicher Grundlagenmaterialien ist eine gute und dauerhafte Verbindung der Feinschichten mit dem Schichtstoff gewährleistet. Die Verwendung von thermoplastischem Polyester-Harz erlaubt die bei dem Beschichten des Trägermaterials um Kanten (Post-forming) bis zu einem sehr kleinen Biegeradius notwendige Verformbarkeit und auch das nachträgliche Verformen des schon beschichteten Trägermaterials bei Anwendung von verhältnismäßig geringen Bearbeitungstemperaturen.

Nach einem weiteren bevorzugten Merkmal der Erfindung werden vor der spanabhebenden Bearbeitung an nicht beschichteten Kanten des Trägermaterials Abdeckkanten angebracht.

Diese Abdeckplatten sind vorzugsweise im Extrudierverfahren hergestellt.

Vorzugsweise werden die Abdeckkanten aus Polyacryl hergestellt, die sich überraschenderweise durch die mit der erfindungsgemäß vorgesehenen spanabhebenden Bearbeitung mit einer Hochglanz-Oberfläche versehen lassen.

Nach einem weiteren Merkmal der Erfindung erfolgt die spanabhebende Bearbeitung zur Erzeugung der Hochglanz-Oberflächen, zumindest nach dem Beschichten mit der obersten Feinschicht auf wenigstens einer Fläche und an wenigstens einer Kante und umfaßt wenigstens einen Feinschliff-Arbeitsgang und wenigstens einen Polier-Arbeitsgang. Die Erzeugung von Hochglanz-Oberflächen erfordert eine vollständig ebene Oberfläche, die dann poliert werden muß. Erfahrungsgemäß ist mit dem Einsatz wenigstens eines Feinschliff-Arbeitsgangs und wenigstens eines Polier-Arbeitsgangs die kürzeste Bearbeitungszeit bei der Erzeugung von Hochglanz-Oberflächen zu erzielen.

Zweckmäßigerweise wird der Feinschliff-Arbeitsgang mit einer Druckbalken-Schleifmaschine und der Polier-Arbeitsgang mit einer Schwabbelmaschine durchgeführt. Die Druckbalken-Schleifmaschine kann auch geringste Unebenheiten über Sensoren feststellen und durch von den Sensoren gesteuerten gesonderte Druckbalken, die auf ein quer zur Vorschubrichtung laufendes Schleifband einwirken, eine vollständig ebene Fläche erzeugen. Erfahrungsgemäß sind nur ein Feinschliff-Arbeitsgang und nur zwei Polier-Arbeitsgänge, die mit zur Schleifrichtung ungefähr quer liegenden Bearbeitungsrichtungen durchgeführt werden, zur Erzielung von Hochglanz-Oberflächen notwendig.

Wie schon oben beschrieben, können nach dem bekannten Verfahren Möbelteile mit Hochglanz-Oberflächen nur mit sehr teurerem und schwerem Trägermaterial, z.B. aus hochverdichteten Fasern oder Holz hergestellt werden.

Eine weitere Aufgabe der Erfindung ist es, Möbelteile mit Hochglanz-Oberflächen zu schaffen, bei denen ein leichteres und preisgünstigeres Trägermaterial als bei den nach dem bekannten Verfahren hergestellten Möbelteilen verwendet werden kann.

Diese Aufgabe wird erfindungsgemäß dadurch gelöst, daß die Möbelteile mit Hochglanz-Oberflächen, die insbesondere nach dem vorbeschriebenen erfindungsgemäßen Verfahren hergestellt werden, aus einem als Spanplatte ausgebildetem Trägermaterial bestehen, das mit einem Schichtkörper beschichtet ist, über dem wenigstens eine Feinschicht angeordnet ist, deren obere Fläche durch spanabhebende Bearbeitung hochglänzend ist.

Spanplatten sind bekannterweise leichter und preisgünstiger als Platten aus Holz oder hochverdichteten Fasern. Der Einsatz von Spanplatten wird durch die Anwendung des erfindungsgemäßen Verfahrens zur Herstellung der Möbelteile möglich.

Eine weitere Aufgabe der Erfindung ist es, insbesondere mit dem erfindungsgemäßen Verfahren, Möbelteile mit mit Intarsien etc. ausgestatteten Oberflächen zu schaffen.

Diese Aufgabe wird erfindungsgemäß dadurch gelöst, daß unter der obersten Feinschicht wenigstens eine Einlage angeordnet ist, deren obere Fläche mit der oberen Fläche der unter der obersten Feinschicht angeordneten Schicht bündig ist.

Damit ist es möglich, Möbelteile mit mit Intarsien etc. ausgestatteten Oberflächen aus mit Schichtstoff beschichteten Spanplatten zu schaffen.

Um ein ganzflächiges Aufbringen von Einlagen, z.B. Intarsien und/oder eine unverhältnismäßig dikke oberste Feinschicht zu vermeiden, sind nach einer vorteilhaften Ausführungsform der Erfindung in den unter der obersten Feinschicht liegenden Schichten Aussparungen angeordnet, deren Abmessungen den Abmessungen der Einlagen angepaßt sind.

Nach einem weiteren Merkmal der Erfindung sind über dem Schichtstoff zumindest zwei Feinschichten angeordnet. Die trotz zweier notwendiger Schutzschichten wirtschaftlicheren Möbelteile mit Einlagen werden mit dieser Maßnahme ermöglicht, da die Möbelteile mit oder ohne Einlagen bis zum Beschichten des Trägermaterials mit dem Schichtstoff, der vorher schon mit einer Feinschicht beschichtet wurde, im gleichen Verfahren hergestellt werden, was aufgrund höherer Stückzahlen wirtschaftlicher als gesonderte Herstellungsgänge ist.

Nach einer bevorzugten Ausführungsform der Erfindung wird als Schichtstoff ein auf der Grundlage von Polyester-Harz hergestellter Schichtstoff und als Feinschicht Polyester-Harz verwendet. Schichtstoffe aus Polyester-Harz haben den Vorteil, daß sie bei verhältnismäßig geringer Temperatur über Möbelkanten mit geringsten Radien verformbar sind. Durch die Verwendung gleicher Grundmaterialien für Schichtstoff und Feinschichten ist eine gute und dauerhafte Verbindung dieser untereinander gewährleistet.

Die Einlagen bestehen nach einem weiteren Merkmal der Erfindung aus Papier, Metall, Holz, Leder, Stein, Glas und/oder ähnlichen Materialien. Da die Einlagen von zumindest einer Feinschicht zumindest in ihrem oberen Bereich vollständig umschlossen sind, d.h. trotz Schutzschicht auch der optische Eindruck nicht vermindert ist und die Haltbarkeit der Einlagen gewährleistet ist, sind den verwendeten Materialien praktisch keine Grenzen gesetzt.

Nach einem weiteren bevorzugten Merkmal der Erfindung sind an den nicht beschichteten Kanten des Trägermaterials Abdeckkanten befestigt, die durch spanabhenbede Bearbeitung hochglänzend sind.

Diese Abdeckkanten bestehen erfindungsgemäß aus Polyacryl.

Das erfindungsgemäße Verfahren zur Herstellung von Hochglanz-Oberflächen auf einem Trägermaterial findet z.B. Anwendung bei der Herstellung von Küchenmöbeln mit Hochglanz-Oberflächen. Als Trägermaterial bei Küchenmöbeln werden üblicherweise Spanplatten verwendet, die mit einem Schichtstoff, der z.B. auf der Grundlage von Polyester-Harz hergestellt ist, beschichtet werden. Nach einem bevorzugten Ausführungsbeispiel des erfindungsgemäßen Verfahrens wird vor der Beschichtung der Spanplatten der Schichtstoff mit einer Feinschicht beschichtet, die zur Gewährleistung der festen Verbindung zwischen Schichtstoff und Feinschicht und der gleichen Verformbarkeit aus demselben Material wie die Grundlage des Schichtstoffes besteht, d.h. bei dem angeführten Beispiel aus Polyester-Harz. Üblicherweise werden die Spanplatten vor dem Beschichten in den erforderlichen Breiten zugeschnitten und evtl. mit besonderen Kantenkonturen versehen. Bei dem im vorliegenden Beispiel erwähnten Schichtstoff ergibt sich bekanntermaßen die Möglichkeit, mittels geringer Temperatur und Aufbringen geringen Druckes, den Schichtstoff um Möbelkanten mit kleinsten Radien zu verformen (Post-forming). Danach werden die so beschichteten Spanplatten auf die gewünschten Längen abgelängt.

Für Möbelteile ohne mit Intarsien oder ähnlichem ausgestatteten Oberflächen werden die durch die Ablängung entstandenen unbeschichteten Kanten mit Abdeckkanten aus Polyacryl versehen. Danach werden die mit der Hochglanz-Oberfläche zu versehende Fläche und alle Kanten mit einer Druckbalken-Schleifmaschine in einem Feinschliff-Arbeitsgang geschliffen und durchlaufen dann üblicherweise zwei Polier-Arbeitsgänge mittels einer Schwabbelmaschine, wobei die Bearbeitungsrichtung für die Flächen ungefähr quer zu der Bearbeitungsrichtung des Feinschliff-Arbeitsganges liegt und zwischen den beiden Polier-Arbeitsgängen um ca. 30° versetzt ist.

Für Möbelteile, die mit Intarsien oder ähnlichem ausgestattet werden sollen, wird die mit den Abdeckkanten versehene, abgelängte Spanplatte auf der mit den Einlagen zu versehenden Fläche mit Aussparungen, die in den Abmessungen den Abmessungen den Einlagen entsprechen, mittels spanabhebender Bearbeitung, z.B. Fräsen, versehen. Die Einlagen werden in diese Aussparungen eingepaßt und dauerhaft verbunden. Danach wird eine oberste Feinschicht aufgebracht, die dann entsprechend den für Möbelteile ohne Einlagen beschriebenen Arbeitsgängen bearbeitet wird.

Nach einem Ausführungsbeispiel des erfindungsgemäßen Verfahrens werden für die Einbringung von Einlagen nach dem oben beschriebenen Vorgang abgelängte Spanplatten verwendet, die mit dem Schichtstoff ohne eine Feinschicht beschichtet sind. Dies erfordert aber eine spezielle Fertigung von Schichtstoffen.

Nach einem bevorzugten Ausführungsbeispiel des erfindungsgemäßen Verfahrens werden für die Einbringung von Einlagen nach dem oben beschriebenen Vorgang die abgelängten Spanplatten, die mit dem mit einer Feinschicht vorgefertigten Schichtstoff beschichtet sind, verwendet, um eine Sonderfertigung der Schichtstoffe für den geringen Anteil der Möbelteile mit Einlagen im Verhältnis zu denen ohne Einlagen und die damit verbundene Verteuerung der Möbelteile zu vermeiden.

Ausführungsbeispiele für Möbelteile mit Hochglanz-Oberflächen, die nach dem erfindungsgemäßen Verfahren hergestellt wurden, sind in der Zeichnung dargestellt. Es zeigen:

Fig. 1 einen Schnitt durch ein Möbelteil ohne Einlage in starker Vergrößerung,

Fig. 2 einen Schnitt durch ein Möbelteil mit einer Einlage und mit einer Feinschicht in starker Vergrößerung,

Fig. 3 einen Schnitt durch ein Möbelteil mit einer Einlage und mit zwei Feinschichten in starker Vergrößerung,

Fig. 4 einen Schnitt durch ein Möbelteil, entsprechend Fig. 1 oder 2, mit unbeschichteter Abdeckkante,

Fig. 5 einen Schnitt durch ein Möbelteil entsprechend Fig. 3 mit unbeschichteter Abdeckkante,

Fig. 6 einen Schnitt durch ein Möbelteil entsprechend Fig. 1 oder 2, mit beschichteter Abdeckkante,

Fig. 7 einen Schnitt durch ein Möbelteil entsprechend Fig. 3, mit beschichteter Abdeckkante.

Die mit dem erfindungsgemäßen Verfahren hergestellten Möbelteile bestehen aus einem als Spanplatte 1 ausgebildeten Trägermaterial, das mit einem Schichtstoff 2 beschichtet ist, der auf der Grundlage von Polyester-Harz hergestellt wurde. Über dem Schichtstoff 2 ist wenigstens eine oberste Feinschicht 6 aus Polyester-Harz angeordnet.

Bei den Möbelteilen ist die obere Fläche 10 dieser obersten Feinschicht 6 entsprechend dem erfindungsgemäßen Verfahren mit einer Hochglanz-Oberfläche versehen.

In den Figuren sind die Möbelteile vor der spanabhebenden Bearbeitung dargestellt. Die Lage der oberen Fläche 10' der obersten Feinschicht 6 nach der Bearbeitung ist mittels strichpunktierter Linien angedeutet. Gleiche Bestandteile sind mit gleichen Bezugsziffern bezeichnet.

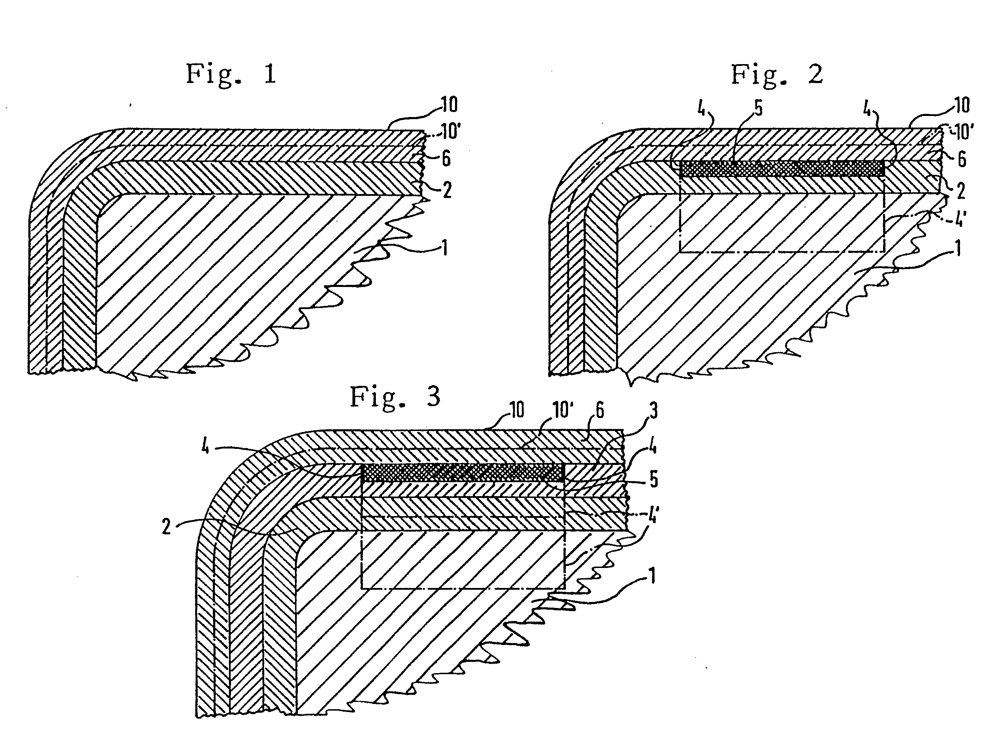

In Fig. 1 ist ein Möbelteil ohne Einlage gezeigt.

In den Fig. 2 und 3 sind Ausführungsbeispiele für Möbelteile mit Einlagen 5, die entsprechend den beiden möglichen, oben beschriebenen Verfahren hergestellt sind, dargestellt.

Bei Möbelteilen mit einer Feinschicht 6 und einer Einlage 5 (Fig. 2) ist in der unter der obersten Feinschicht 6 liegenden Schicht im gezeigten Ausführungsbeispiel in dem Schichtstoff 2 eine Aussparung 4, deren Abmessungen entsprechend den Abmessungen der Einlage 5 ausgestaltet ist, angeordnet. Eine tiefere Aussparung 4', die bis in die Spanplatte 1 reicht, ist mit strichpunktierten Linien angedeutet. Die obere Fläche der Einlage 5 ist mit der oberen Fläche des Schichtstoffes 2 bündig. Die obere Fläche 10 der obersten Feinschicht 6 wird entsprechend dem erfindungsgemäßen Verfahren bis auf eine geringe Schichtdicke über der oberen Fläche der Einlage 5 abgetragen.

Bei Möbelteilen mit zwei Feinschichten 3, 6 und einer Einlage 5 (Fig. 3) ist in den unter der obersten Feinschicht liegenden Schichten im Ausführungsbeispiel in der ersten Feinschicht 3 eine Aussparung 2 mit Abmessungen entsprechend den Abmessungen der Einlage 5 angeordnet. Eine tiefere Aussparung 4', die durch den Schichtstoff 2 bis in die Spanplatte 1 reicht, ist mit strichpunktierten Linien angedeutet. Die obere Fläche der Einlage 5 ist bündig mit der oberen Fläche der ersten Feinschicht 3. Bei dem Möbelteil nach diesem Ausführungsbeispiel mit Einlage 5 ist über der ersten Feinschicht 3 eine zweite, oberste Feinschicht 6 angeordnet, deren obere Fläche 10 entsprechend dem erfindungsgemäßen Verfahren mit einer Hochglanz-Oberfläche versehen ist, wobei die oberste Feinschicht 6 bis auf eine geringe Schichtdicke über der oberen Fläche der Einlage 5 abgetragen wird.

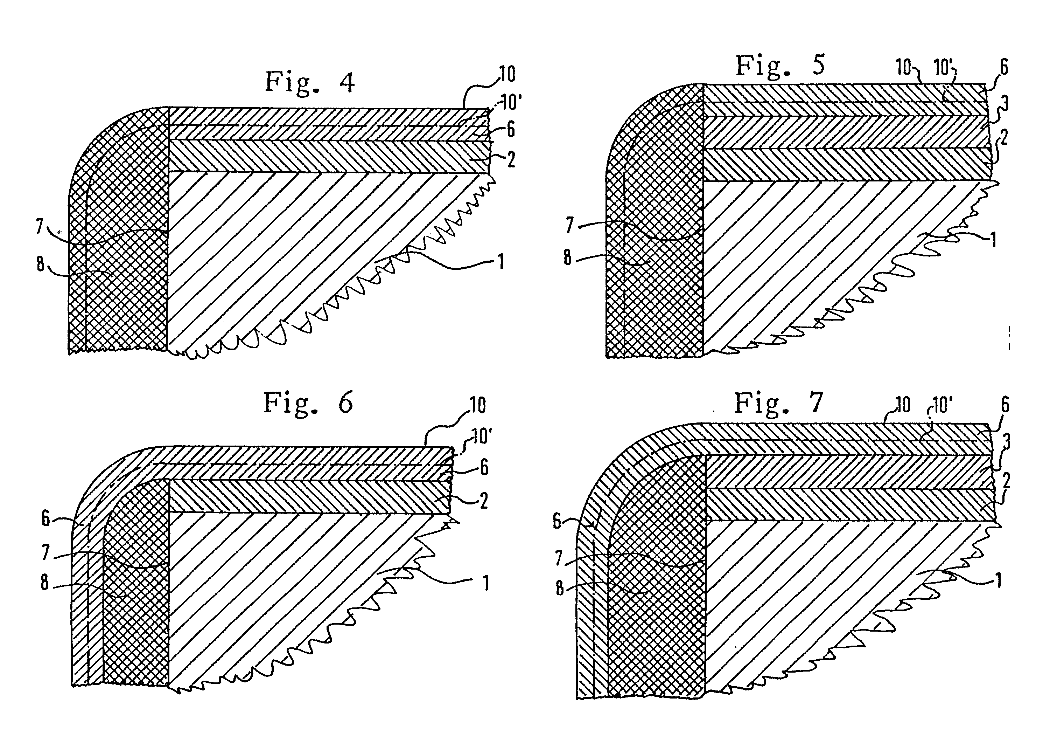

In den Fig. 4 und 5 ist die Anbringung von Abdeckkanten 8 an den unbeschichteten Kanten 7 der Möbelteile dargestellt, wobei die Hochglanz-Oberfläche auf der oberen Fläche der Abdeckkanten 8 erzeugt wird. Die dabei verwendeten Abdeckkanten 8 sind aus Polyacryl hergestellt.

In Fig. 4 ist ein Möbelteil mit einer Feinschicht 6 entsprechend Fig. 1 oder 2 mit an der unbeschichteten Kante 7 der Spanplatte 1 angebrachter Abdeckkante 8 dargestellt.

In Fig. 5 ist ein Möbelteil mit zwei Feinschichten 3, 6 entsprechend Fig. 3 und mit Abdeckkante 8 dargestellt.

In den Fig. 6 und 7 ist die Anbringung von Abdeckkanten 8 an den unbeschichteten Kanten 7 der Möbelteile dargestellt, wobei die Abdeckkante 8 von der obersten Feinschicht 6 überzogen ist und die Hochglanz-Oberfläche auf der oberen Fläche der obersten Feinschicht 6 erzeugt wird.

In Fig. 6 ist ein Möbelteil mit einer Feinschicht 6 entsprechend Fig. 1 oder 2 gezeigt.

In Fig. 7 ist ein Möbelteil mit zwei Feinschichten 3, 6 entsprechend Fig. 3 gezeigt.

## Ansprüche

1. Verfahren zur Herstellung von Hochglanz-Oberflächen auf einem Trägermaterial, **dadurch gekennzeichnet,** daß auf einen Schichtstoff (2) zum Beschichten des Trägermaterials (1) wenigstens eine Feinschicht (3, 6) aufgebracht wird, wobei die obere Fläche (10) der obersten Feinschicht (6) durch spanabhebende Bearbeitung mit der Hochglanz-Oberfläche versehen wird.

2. Verfahren nach Anspruch 1, dadurch gekennzeichnet, daß die oberste Feinschicht (6) auf den Schichtstoff (2) nach dem Beschichten des Trägermaterials (1) mit dem mit ggf. weiteren Feinschichten (3) beschichtetem Schichtstoff (2) aufgebracht wird.

3. Verfahren nach Anspruch 1 oder 2, dadurch gekennzeichnet, daß auf den Schichtstoff (2) zumindest zwei Feinschichten (3, 6) aufgebracht werden.

4. Verfahren nach Anspruch 2, dadurch gekennzeichnet, daß vor dem Beschichten mit der obersten Feinschicht (6) wenigstens eine Einlage (5) eingebracht wird.

5. Verfahren nach Anspruch 4, dadurch gekennzeichnet, daß zur Aufnahme der Einlagen (5) die unter der obersten Feinschicht (6) liegenden Schichten (3, 2, 1) mit den Abmessungen der Einlagen (5) entsprechend ausgestalteten Aussparungen (4) versehen werden.

6. Verfahren nach Anspruch 5, dadurch gekennzeichnet, daß die Aussparungen (4) für die Einlagen (5) mittels spanabhebender Bearbeitung hergestellt werden.

7. Verfahren nach einem der Ansprüche 4 bis 6, dadurch gekennzeichnet, daß die oberen Flächen der Einlagen (5) mit der oberen Fläche der unter der obersten Feinschicht (6) liegenden Schicht (3, 2) bündig sind.

8. Verfahren nach einem der Ansprüche 4 bis 7, dadurch gekennzeichnet, daß die oberste Feinschicht (6) durch die spanabhebende Bearbeitung zur Erzeugung der Hochglanz-Oberfläche bis auf eine geringe Schichtdicke über den oberen Flächen der Einlagen (5) abgetragen wird.

9. Verfahren nach einem der Ansprüche 1 bis 8, dadurch gekennzeichnet, daß als Schichtstoff (2) ein auf der Grundlage von Polyester-Harz hergestellter Schichtstoff und als Feinschichten (3, 6) Polyester-Harz verwendet sind.

10. Verfahren nach einem der Ansprüche 1 bis 9, dadurch gekennzeichnet, daß vor der spanabhebenden Bearbeitung an nicht beschichteten Kanten (7) des Trägermaterials (1) Abdeckkanten (8) angebracht werden.

11. Verfahren nach Anspruch 10, dadurch gekennzeichnet, daß die Abdeckkanten (8) im Extrudierverfahren hergestellt sind.

12. Verfahren nach einem der Ansprüche 10 oder 11, dadurch gekennzeichnet, daß die Abdeckkanten (8) aus Polyacryl hergestellt sind.

13. Verfahren nach einem der Ansprüche 1 bis 12, dadurch gekennzeichnet, daß die spanabhebende Bearbeitung zur Erzeugung der Hochglanz-Oberflächen zumindest nach dem Beschichten mit der obersten Feinschicht (6) auf wenigstens einer Fläche und an wenigstens einer Kante erfolgt und wenigstens einen Feinschliff-Arbeitsgang und wenigstens einen Polier-Arbeitsgang umfaßt.

14. Verfahren nach Anspruch 13, dadurch gekennzeichnet, daß der Feinschliff-Arbeitsgang mit einer Druckbalken-Schleifmaschine und der Polier-Arbeitsgang mit einer Schwabbelmaschine durchgeführt wird.

15. Möbelteile mit Hochglanz-Oberflächen, insbesondere hergestellt mit dem Verfahren nach einem der Ansprüche 1 bis 14, dadurch gekennzeichnet, daß die Möbelteile aus einem als Spanplatte (1) ausgebildeten Trägermaterial bestehen, das mit einem Schichtstoff (2) beschichtet ist, über dem wenigstens eine Feinschicht (3, 6) angeordnet ist, deren obere Fläche (10) durch spanabhebende Bearbeitung hochglänzend ist.

16. Möbelteile nach Anspruch 15, dadurch gekennzeichnet, daß unter der obersten Feinschicht (6) wenigstens eine Einlage (5) angeordnet ist, deren obere Fläche mit der oberen Fläche der unter der obersten Feinschicht (6) angeordneten Schicht (3, 2) bündig ist.

17. Möbelteil nach Anspruch 16, dadurch gekennzeichnet, daß in den unter der obersten Feinschicht (6) liegenden Schichten (3, 2, 1) Aussparungen (4) angeordnet sind, deren Abmessungen den Abmessungen der Einlagen (5) angepaßt sind.

18. Möbelteil nach einem der Ansprüche 15 bis 17, dadurch gekennzeichnet, daß über dem Schichtstoff (2) zumindest zwei Feinschichten (3, 6) angeordnet sind.

19. Möbelteile nach einem der Ansprüche 15 bis 18, dadurch gekennzeichnet, daß als Schichtstoff (2) ein auf der Grundlage von Polyester-Harz hergestellter Schichtstoff und als Feinschicht (3, 6) Polyester-Harz verwendet sind.

20. Möbelteile nach einem der Ansprüche 15 bis 19, dadurch gekennzeichnet, daß die Einlagen (5) aus Papier, Metall, Holz, Leder, Stein, Glas und/oder ähnlichen Materialien bestehen.

21. Möbelteile nach einem der Ansprüche 15 bis 20, dadurch gekennzeichnet, daß an den nicht beschichteten Kanten (7) des Trägermaterials (2) Abdeckkanten (8) befestigt sind, die durch spanabhebende Bearbeitung hochglänzend sind.

22. Möbelteile nach Anspruch 21, dadurch gekennzeichnet, daß die Abdeckkanten (8) aus Polyacryl bestehen.

Fig. 1

Fig. 2

Fig. 3

EP 0 410 185 A2

Fig. 4

Fig. 5

Fig. 6

Fig. 7

EP 0 410 185 A2